# EUROPEAN PATENT APPLICATION

(11) **EP 4 633 026 A1**
(43) Date of publication of application: **15.10.2025**
(21) Application number: 25168371.0
(22) Date of filing: 03.04.2025
(51) Int. Cl.: H02M 3/335, H02M 1/44, H02M 1/00, H02M 1/08

(54) **GATE DRIVE POWER SUPPLY USING PROGRAMMABLE DEVICE IN MOTOR DRIVE APPLICATION**

(30) Priority: 04.04.2024 IN 202411028006
(71) Applicant: Hamilton Sundstrand Corporation, Charlotte, NC 28217-4578 (US)
(72) Inventor: KUMAR, Manish, 560066 Karnataka (IN); KALLURI, Nageswara Rao, 560016 Nagar, Bangalore (IN); GHOSE, Tanay, 700064 Kolkata, West Bengal (IN); BANAHATTI, Bapu Kallappa, 560078 Bangalore, Karnataka (IN)
(74) Representative: Dehns

(57) **Abstract**

A system is provided including a pulse width modulation controller (105) configured to control a first output voltage of a first power supply associated with the system, wherein the first power supply is referenced to an input ground associated with the system. The system includes a programmable device (110) configured to control at least a second output voltage of a second power supply associated with the system, wherein the second power supply is referenced to an output ground associated with the system. The programmable device (110) is powered based on the first output voltage.

## Description

### CROSS-REFERENCE TO RELATED APPLICATIONS

This application claims the benefit of Indian Patent Application No. 202411028006 filed April 4, 2024.

### BACKGROUND

The present disclosure relates to power supplies in motor drive applications and, in particular, to power supplies using a programmable device in motor drive applications.

In some aerospace motor drive products, an isolated gate drive DC-DC converter may be included with different power driving capability and power sequencing specifications. In some cases, designers may commonly rely on multiple instances of pulse width modulation (PWM) controller ICs available in the market to create the power supplies.

In some motor drive products, when multiple instances of a DC-DC converter are used and are working in isolation, there is limited or no opportunity to exchange the data among the instances of the DC-DC converter. Accordingly, for example, such implementations are prone to disadvantages including, but not limited to, ineffective (or a lack of) coordination or sequencing between the DC-DC converters, ineffective (e.g., late, or none) fault detection and proper shutdown, and a lack of tunable voltage regulation.

### BRIEF DESCRIPTION

According to one or more embodiments of the present disclosure, a system is provided including: a pulse width modulation controller configured to control a first output voltage of a first power supply associated with the system, wherein the first power supply is referenced to an input ground associated with the system; and a programmable device configured to control at least a second output voltage of a second power supply associated with the system, wherein the second power supply is referenced to an output ground associated with the system, wherein the programmable device is powered based on the first output voltage.

In any one or combination of the embodiments disclosed herein, the system further includes: a first voltage regulator including the pulse width modulation controller; and a second voltage regulator, wherein: the programmable device is configured to generate and provide a drive signal to the second voltage regulator in association with controlling the drive signal; and the second output voltage is based on the drive signal.

In any one or combination of the embodiments disclosed herein, the first output voltage at the first power supply and the second output voltage at the second power supply are based on an input voltage received at the first voltage regulator and the second voltage regulator.

In any one or combination of the embodiments disclosed herein, the second voltage regulator includes a field effect transistor controllable based on the drive signal, wherein the field effect transistor is referenced to the input ground and is galvanically isolated from the programmable device.

In any one or combination of the embodiments disclosed herein, the system further includes: an auxiliary supply referenced to the input ground associated with the system; a gate driver powered by the auxiliary supply; and an isolator powered by the auxiliary supply and first output voltage, wherein first circuitry of the isolator is referenced to the input ground associated with the system, and second circuitry of the isolator is referenced to another output ground associated with the system, wherein the programmable device is configured to provide the drive signal to the field effect transistor via the gate driver and the isolator.

In any one or combination of the embodiments disclosed herein, the second power supply is galvanically isolated from the second voltage regulator, the first voltage regulator, the first power supply, and the programmable device.

In any one or combination of the embodiments disclosed herein, the system further includes a current sensing device configured to provide a sensed current associated with providing the second output voltage, wherein the programmable device is configured to generate or modify a drive signal associated with controlling at least the second output voltage, based on the sensed current.

In any one or combination of the embodiments disclosed herein, the programmable device is configured to generate or modify a drive signal associated with controlling at least the second output voltage, based on a measurement of the second output voltage.

In any one or combination of the embodiments disclosed herein: the programmable device is configured to generate or modify a pulse width modulation drive signal associated with controlling at least the second output voltage, based on voltage feedback and current feedback associated with the second output voltage

In any one or combination of the embodiments disclosed herein, the system further includes a control device configured to control one or more functions of the system, wherein the programmable device is included in a portion of the control device.

In any one or combination of the embodiments disclosed herein, the system further includes a first transformer configured to: generate the first output voltage at a first winding of the transformer based on an input voltage; and generate an auxiliary output voltage at an auxiliary winding of the first transformer based on the input voltage. In any one or combination of the embodiments disclosed herein, the system further includes a second transformer configured to generate the second output voltage at a second winding of the second transformer based on the input voltage, wherein the first winding is galvanically isolated from the second winding.

According to one or more embodiments of the present disclosure, an apparatus is provided including: a pulse width modulation controller configured to control a first output voltage of a first power supply associated with a system, wherein the first power supply is referenced to an input ground associated with the system; and a programmable device configured to control at least a second output voltage of a second power supply associated with the system, wherein the second power supply is referenced to an output ground associated with the system, wherein the programmable device is powered based on the first output voltage.

According to one or more embodiments of the present disclosure, a method is provided including: controlling, by a pulse width modulation controller, a first output voltage of a first power supply associated with a system, wherein the first power supply is referenced to an input ground associated with a system; providing the first output voltage to a programmable device; and controlling, by the programmable device, at least a second output voltage of a second power supply associated with the system, wherein the second power supply is referenced to an output ground associated with the system.

In any one or combination of the embodiments disclosed herein: the pulse width modulation controller is included in a first voltage regulator; and the method further includes: generating and providing, by the programmable device, a drive signal to a second voltage regulator; and generating, by the second voltage regulator, the second output voltage based on the drive signal.

In any one or combination of the embodiments disclosed herein, the method further includes: receiving an input voltage at the first voltage regulator and the second voltage regulator; generating, by the first power supply, the first output voltage based on the input voltage; and generating, by the second power supply, the second output voltage based on the input voltage.

In any one or combination of the embodiments disclosed herein, the programmable device provides the drive signal to a field effect transistor included in the second voltage regulator via a gate driver included in the second voltage regulator and an isolator, wherein the field effect transistor is referenced to the input ground and is galvanically isolated from the programmable device.

In any one or combination of the embodiments disclosed herein, the method further includes: providing, by a current sensing device, a sensed current associated with providing the second output voltage; and generating or modifying, by the programmable device, a drive signal associated with controlling at least the second output voltage, based on the sensed current.

In any one or combination of the embodiments disclosed herein, the method further includes: generating or modifying, by the programmable device, a drive signal associated with controlling at least the second output voltage, based on a measurement of the second output voltage.

In any one or combination of the embodiments disclosed herein, the method further includes: generating or modifying, by the programmable device, a pulse width modulation drive signal associated with controlling at least the second output voltage, based on at least one of voltage feedback and current feedback associated with the second output voltage.

In any one or combination of the embodiments disclosed herein, the method further includes: controlling, by a control device, one or more functions of the system different from control of the first power supply and the second power supply, wherein the programmable device is included in a portion of the control device.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an example system in accordance with one or more embodiments of the present disclosure.
FIG. 2 illustrates an example flowchart of a method in accordance with one or more embodiments of the present disclosure.
FIG. 3 illustrates an example flowchart of a method in accordance with one or more embodiments of the present disclosure.

### DETAILED DESCRIPTION

A detailed description of one or more embodiments of the disclosed apparatus and method are presented herein by way of exemplification and not limitation with reference to the Figures.

According to one or more embodiments of the present disclosure, systems and techniques are described herein which support generating multiple isolated power supply rails, example aspects of which are described with reference to the following figures.

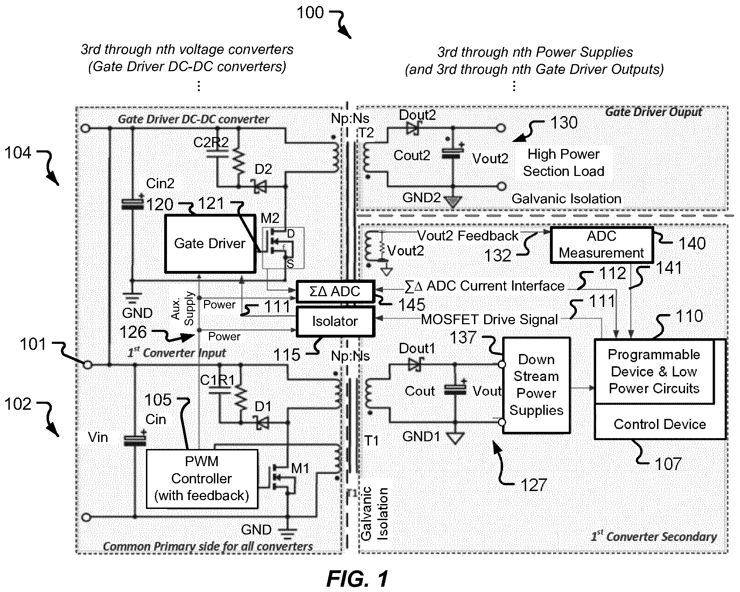

FIG. 1 illustrates an example motor drive system 100 in accordance with one or more embodiments of the present disclosure. Embodiments of the present disclosure are not limited to the features illustrated at FIG. 1, and it is to be understood that the motor drive system 100 may include other components supportive of features or operations of the motor drive system 100. Aspects of the present disclosure support applying the described features of the motor drive system 100 to other power systems including multiple instances of voltage converters.

In accordance with one or more embodiments of the present disclosure, the motor drive system 100 is capable of generating multiple isolated power supply rails (e.g., isolated power supplies such as, for example, isolated power supply 130 and 3rd through nth isolated power supplies (not illustrated)). The outputs at the power supply rails may also be referred to as output voltages Vout2 and output voltages Vout3 (not illustrated) through Voutn (not illustrated).

The power supply rails are galvanically isolated from both the input power source which provides the input voltage supply (input voltage Vin) and from each other. The power supply rails maintain a common reference ground connection with the input voltage supply. In some examples, the input voltage Vin may be 28VDC, but is not limited thereto. For example, the input voltage Vin may be any voltage suitable for operation of the motor drive system 100. non-limiting examples of the input voltage Vin include 15V, 28V, and the like.

In some embodiments, the output voltages Vout2 and output voltages Vout3 (not illustrated) through Voutn (not illustrated) may be the same or different. For example, one or more gate drive power supplies described herein (e.g., isolated power supply 130) may be capable of generating and providing an output voltage (e.g., output voltage Vout2) which is the same or different (voltage wise e.g. all outputs rails are 15V or have different voltage such as 15V, 20V ...so on) from an output voltage (e.g., output voltage Vout3) generated and provided by one or more other gate drive power supplies (e.g., a 3rd isolated power supply) described herein.

The motor drive system 100 employs a voltage converter 102 (e.g., a DC-DC converter) (also referred to herein as 1st converter or 1st converter secondary). The voltage converter 102 includes a PWM controller 105 associated with generating isolated power supplies (e.g., power supply 127, isolated power supply 130, 3rd through nth isolated power supplies) and a non-isolated auxiliary supply (e.g., auxiliary supply 126). The auxiliary supply 126 is configured to supply power to circuits on the primary side of the motor drive system 100. For example, the auxiliary supply 126 is configured to supply power to circuitry (e.g., PWM controller 105) on the primary side of the voltage converter 102 (1st converter). In another example, the auxiliary supply 126 is configured to supply power to circuitry (e.g., gate driver 120) on the primary side of gate drive DC-DC converters.

Some example aspects described herein refer to a primary side of the transformer (e.g., left side of the transformer of FIG. 1) and a secondary side of the transformer (e.g., right side of the transformer). The PWM controller 105 may be referred to as a primary side PWM controller, and the programmable device 110 may be referred to as a secondary side PWM controller.

The voltage converter 102 includes a PWM controller 105, an input capacitor Cin, a snubber circuit (e.g., including diode D1, resistor R1, and capacitor C1), and a MOSFET M1. A diode D2 and an output capacitor Cout may be associated with the power supply 127. The resistor R1 and the capacitor C1 are coupled to an input terminal 101 for receiving the input voltage Vin, a terminal of the input capacitor Cin, and a terminal of a winding at the primary side of the transformer. The resistor R1 and the capacitor C1 are further coupled to the diode D1, and the diode D1 is further coupled to another terminal of the winding at the primary side of the transformer.

The drain of the MOSFET M1 is coupled to the diode D1 and the other terminal of the winding at the primary side of the transformer. The source of the MOSFET M1 is coupled to the primary ground GND,. The gate of the MOSFET M1 is coupled to the PWM controller 105. The input capacitor Cin (at another terminal of the input capacitor Cin) is coupled to the primary ground GND. The PWM controller 105 is coupled to a terminal of another winding at the primary side of the transformer.

The diode Dout1 is coupled to a terminal of a winding at the secondary side of the transformer and an output terminal for providing the output voltage Vout. The output capacitor Cout is coupled to the diode Dout1, another terminal of the winding at the secondary side of the transformer, the output terminal for providing the output voltage Vout, and a ground GND1 associated with the secondary side of the transformer and the output voltage Vout.

The power supply 127 may be coupled to and provide power to one or more downstream powers supplies 137. The power supply 127 (e.g., and/or one or more downstream powers supplies 137) may provide power to programmable device 110 (and low power circuits included in the programmable device 110) and control device 107. The Auxiliary power supply 126 may provide power to PWM controller 105, isolator 115, gate driver 120, and ADC 145 on the primary side of T1.

In accordance with one or more embodiments of the present disclosure, the output voltage Vout may be a regulated voltage. In some cases, the output voltage

Vout may have some voltage variation.

Aspects of the voltage converter 104 are described herein. The voltage converter 104 includes an isolator 115, a gate driver 120, and an analog-to-digital converter (ADC) 145. In some aspects, ADC 145 is an isolated sigma-delta modulator. The voltage converter 104 further includes an input capacitor Cin2, a snubber circuit (e.g., including diode D2, resistor R2, and capacitor C2), and a MOSFET M2.

The resistor R2 and the capacitor C2 are coupled to the input terminal 101 for receiving the input voltage Vin, a terminal of the input capacitor Cin2, and a terminal of a winding at the primary side of the transformer. The resistor R2 and the capacitor C2 are further coupled to the diode D2, and the diode D2 is further coupled to another terminal of the winding at the primary side of the transformer.

The drain of the MOSFET M2 is coupled to the diode D2 and the other terminal of the winding at the primary side of the transformer. The source of the MOSFET M1 is coupled to the primary ground GND. The gate of the MOSFET M2 is coupled to the gate driver 120 and the ADC 145. The input capacitor Cin2 (at another terminal of the input capacitor Cin2) is coupled to the primary ground GND.

The diode Dout2 is coupled to a terminal of a winding T2 at the secondary side of the transformer and an output terminal for providing the output voltage Vout2. The output capacitor Cout2 is coupled to the diode Dout2, another terminal of the winding T2 at the secondary side of the transformer, the output terminal for providing the output voltage Vout2, and a ground GND2 associated with the secondary side of the transformer and the output voltage Vout2.

The isolated power supply 130 may be coupled to and supply power to high power loads. Example aspects of the isolated power supply 130 are later described herein.

In accordance with one or more embodiments of the present disclosure, the output voltage Vout2 may be a regulated voltage. In some cases, the output voltage Vout2 may have some voltage variation.

The 3rd through nth voltage converters (not illustrated) may include aspects of the voltage converter 104, and repeated descriptions of like elements are omitted for brevity. The 3rd through nth power supplies (also referred to herein as 3rd through nth isolated power supplies) (not illustrated) may include aspects of the isolated power supply 130, and repeated descriptions of like elements are omitted for brevity.

In the examples described herein, the voltage converter 104 and 3rd through nth voltage converters are DC-DC voltage converters (also referred to herein as gate driver DC-DC converters or current converters). However, aspects of the present disclosure are not limited to DC-DC voltage conversion. For example, aspects of the voltage converter 104 and 3rd through nth voltage converters described herein may be applied to an AC-DC converter (also referred to herein as a rectifier), a DC-AC converter (also referred to herein as an inverter), and/or an AC-AC frequency converter (also referred to herein as a transformer).

The motor drive system 100 uses the output voltage Vout produced by the voltage converter 102 (1st converter) to power the programmable device 110. As described herein, the programmable device 110 may be an FPGA or a microcontroller unit (MCU).

The programmable device 110 may generate drive signals 111 for driving Metal Oxide Silicon Field Effect Transistors (MOSFETs) of multiple DC-DC Converters (e.g., MOSFET M2 of voltage converter 104 and/or respective MOSFETs of 3rd through nth voltage converters).

According to one or more embodiments of the present disclosure, the placement of the programmable device 110 is in a ground plane different from the ground plane of the primary side of the motor drive system 100, and the motor drive system 100 supports achieving isolation for drive signals 111 through use of an isolator 115 or optocoupler. Accordingly, for example, the motor drive system 100 supports conveying drive signals 111 through the isolator 115 or optocoupler.

The motor drive system 100 supports a closed loop feedback system. For example, the motor drive system 100 includes a closed loop formed for voltage regulation, in which the programmable device 110 is configured to receive voltage feedback signals (e.g. 132, Vout Feedback for 2^{nd} convertor, through aux windings of T2) and current feedback signals associated with the voltage converter 104 via ADC 145 and a current interface 112.

Voltage feedback may refer to readings of the voltage levels of each power supply rail on the secondary side of each converter, by means of an ADC or other suitable conversion mechanism. Current feedback refers to the current being drawn from each rail on the secondary side of each converter. A non-limiting example of obtaining current feedback includes connecting a low value resistor to a rail and measuring the voltage drop across the resistor by means of an ADC. A non-limiting example of obtaining current feedback includes using a Hall Effect sensor, which employs the Hall Magnetic Field effect, such that the sensor produces an output voltage proportional to the input current passing through the sensor. The voltage may be measured using ADCs.

In some aspects, the voltage feedback signals (voltage monitoring signals) are referenced to primary ground GND, and the current feedback signals (current monitor signals) are referenced to secondary ground. For example, current feedback signals associated with output voltage Vout2 are referenced to secondary ground GND1, and current feedback signals associated with output voltage Vout are referenced to secondary ground GND1.

Aspects of the closed loop feedback described with reference to programmable device 110 and voltage converter 104 may be extended to other voltage converters (e.g., 3rd through nth voltage converters, excluding voltage converter 102) sharing the common input ground reference associated with the primary side of the motor drive system 100. Aspects of the closed loop feedback support and facilitate coordinated operation and power sequencing among the voltage converter 104 and 3rd through nth voltage converters) and among the isolated power supply 130 and 3rd through nth power supplies. Accordingly, for example, based on the closed loop feedback, the motor drive system 100 may be implemented without separate voltage monitoring.

In some aspects, the programmable device 110 may be implemented by a portion of (e.g., programmable circuitry included) in a control device 107 associated with the motor drive system 100. For example, the control device 107 may support intelligent control of operations of the motor drive system 100. In some cases, the operations may be associated with an electronic device (e.g., an electronic product, a motor drive electronics product) (not illustrated) including the motor drive system 100.

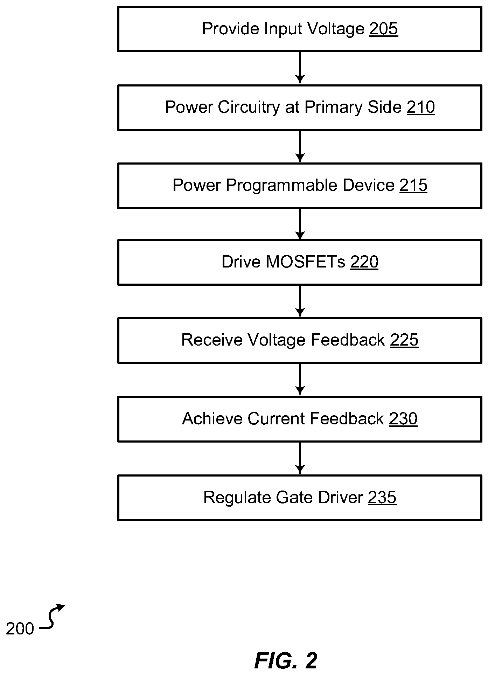

FIG. 2 illustrates an example flowchart of a method 200 in accordance with one or more embodiments of the present disclosure. The method 200 may be implemented by the example aspects of the motor drive system 100 described herein.

At 205, the method 200 may include providing input voltage Vin to the voltage converter 102 (1st converter), which is driven by PWM controller 105 (also referred to herein as a PWM controller IC) described herein.

Based on the input voltage Vin, the voltage converter 102 (1st converter) may generate auxiliary supply 126 and generate power supply 127 referenced to a secondary winding of the transformer T1. In some aspects, the auxiliary supply 126 is referenced to primary ground GND of the motor drive system 100, and the power supply 127 is referenced to the secondary ground GND1 of the motor drive system 100. In some examples, providing the input voltage Vin as described with reference to 205 may be an initial step of the method 200, but aspects of the present disclosure are not limited thereto. As described herein, the auxiliary supply 126 may be a non-isolated power supply, and power supply 127 may be an isolated power supply.

The motor drive system 100 includes transformer T1 and transformer T2, which are multi-winding transformers. Each of transformer T1 and transformer T2 includes a winding referred to herein as an auxiliary winding. In the case of transformer T1, the auxiliary winding is used to generate auxiliary supply 126 for powering the PWM controller 105, gate driver 120, and other circuits on the primary side of transformer T1 and transformer T2. According to one or more embodiments of the present disclosure, the auxiliary winding of transformer T2 may be used for monitoring the output voltage Vout2 and is referenced to secondary ground GND1 (the same ground reference as the programable device 110).

The auxiliary supply 126 on the primary side is generated from the auxiliary winding of transformer T1. Voltage feedback 132 (Vout2 Feedback) is generated using auxiliary winding of transformer T2, but is referenced to secondary ground GND1.

At 210, the method 200 may include the auxiliary supply 126 powering circuitry at the primary side. For example, the auxiliary supply 126 may power isolator 115, ADC 145, circuitry (e.g., PWM controller 105) on the primary side of the voltage converter 102 (1st converter) and power circuitry (e.g., gate driver 120) on the primary side of gate drive DC-DC converters. The example arrangement considers a common input ground (e.g., primary ground GND) for applying the input voltage Vin to each of voltage converter 104 (gate driver DC-DC converter) and voltage converter 102 (1st converter).

In the example illustrated at FIG. 1, isolator 115 and ADC 145 may overlap the primary side and the secondary side of the motor drive system 100. Expressed another way, isolator 115 and ADC 145 are located between the primary and secondary sides (e.g., on the isolation boundary between the primary and secondary sides). In some aspects, a partition may be included in the isolator 115, such that first circuitry of the isolator 115 is referenced to an input ground (e.g., primary ground GND) associated with the motor drive system 100, and second circuitry of the isolator 115 is referenced to an output ground (e.g., secondary ground GND1) associated with the motor drive system 100.

At 215, the method 200 may include utilizing the output voltage Vout produced by the voltage converter 102 (1st converter) to power the programmable device 110. As described herein, the programmable device 110 may be an FPGA or a microcontroller unit (MCU).

At 220, the method 200 may include employing the programmable device 110 to drive the MOSFETs of multiple DC-DC Converters. For example, the programmable device 110 may generate and provide a drive signal 111 (also referred to herein as a MOSFET drive signal) to the MOSFET M2 of the voltage converter 104, via the isolator 115 and gate driver 120. In some aspects, the drive signal 121 generated and provided by the gate driver 120 may be an amplified representation of the drive signal 111.

In some other examples, the programmable device 110 may provide respective drive signals 111 to the MOSFETs of other voltage converters (e.g., 3rd through nth gate driver DC-DC converters) (not illustrated) included in the primary side of the motor drive system 100, via other isolators 115 (not illustrated) and gate drivers 120 respective to the other voltage converters.

In some aspects, as the MOSFETs of the other voltage converters (e.g., including at least voltage converter 104 and non-illustrated voltage converters described herein) are referenced to the primary ground GND and are galvanically isolated from the programmable device 110, the isolator 115 (or respective isolators 115) transmit the respective drive signals 111 to the target MOSFETs.

In some embodiments, the other voltage converters (e.g., including at least voltage converter 104 and non-illustrated voltage converters described herein) may be implemented with a gate driver (e.g., gate driver 120) (also referred to herein as gate drive IC) between an isolator (e.g., an isolator 115) and a target MOSFET (e.g., MOSFET M2). The gate drivers may support improved performance. For example, the gate driver 120 may provide a drive signal 121 (e.g., a high current gate drive) to the MOSFET M2, in which the drive signal 121 corresponds to corresponding to the drive signal 111. In some other embodiments, one or more of the other voltage converters (e.g., voltage converter 104, non-illustrated voltage converters described herein) may be implemented without a gate driver.

As described herein, the isolator 115 and gate driver 120 are powered by the auxiliary supply ( 126) of the voltage converter 102 (1st converter).

At 225, the method 200 may include receiving, at the programmable device 110, voltage feedback 132 (Vout2 feedback) with respect to the output voltage Vout2 generated at the auxiliary winding of transformer T2 (which is referenced to the device ground of the programmable device 110) of the flyback converters through ADC measurement 140. For example, the programmable device 110 may receive measurement data 141 corresponding to the ADC measurement 140.

At 230, the method 200 may include, similar to voltage feedback sensing (e.g., voltage feedback 132), achieving current feedback by sensing the current at the primary side of the voltage converter 104 (gate driver DC-DC converter) and third through nth converters (gate driver DC-DC converters) (not illustrated). For example, at the voltage converter 104, the motor drive system 100 may include a current sense resistor (not illustrated) coupled between the source of the MOSFET M2 and the primary ground GND. In another example, at the 3rd nth voltage converters 104 (not illustrated), the motor drive system 100 may include current sense resistors (not illustrated) respectively coupled between the source of the MOSFETs (not illustrated) of the 3rd through nth voltage converters and the primary ground GND.

The 3rd through nth voltage converters may include aspects of voltage converter 104 described herein, and repeated descriptions of like elements are omitted for brevity. Respective isolated power supplies (not illustrated) associated with the 3rd through nth voltage converters may include aspects of the isolated power supply 130 described herein, and repeated descriptions of like elements are omitted for brevity.

Accordingly, for example, the method 200 may include monitoring voltage (e.g., through voltage feedback 132) (at 225) at output voltage Vout2 with respect to a threshold voltage and monitoring sensed current (e.g., through current feedback) (at 230) with respect to a threshold current. According to one or more embodiments of the present disclosure, the programmable device 110 forms a closed loop feedback system with both the voltage feedback 132 and current feedback described herein.

At 235, the method 200 may include to regulating gate driver 120 of the voltage converter 104 based on the voltage feedback 132 associated with output voltage Vout2 and the current feedback associated with the voltage converter 104.

Similarly, for example, at 235, the method 200 may include regulating gate drivers of one or more of the 3rd through nth voltage converters based on voltage feedback respectively associated with output voltages of the 3rd through nth voltage converters and/or current feedback respectively associated with the 3rd through nth voltage converters.

In accordance with one or more embodiments of the present disclosure, the motor drive system 100 utilizes a common controller (e.g., the programmable device 110) for driving voltage converter 104 and/or any of the 3rd through nth voltage converters, which enables improved coordination, power sequencing, and the like among multiple voltage converters of the motor drive system 100.

In some aspects, given that the programmable device 110 is capable of monitoring the output voltages among the multiple voltage converters of the motor drive system 100, there is no need for separate monitoring of the voltage rails.

Under voltage detection, startup circuitry, and auxiliary winding will be referenced to the return path (or primary ground GND) of primary side of the transformer. The auxiliary winding will supply the necessary power for both the analogue and digital circuits on the primary side, as deemed necessary.

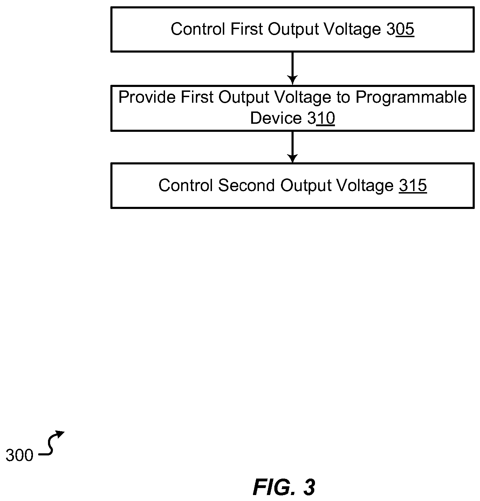

FIG. 3 illustrates an example flowchart of a method 300 in accordance with one or more embodiments of the present disclosure. The method 300 may be implemented by the example aspects of the motor drive system 100 described herein.

At 305, the method 300 may include controlling, by a pulse width modulation controller, a first output voltage of a first power supply associated with a system, where the first power supply is referenced to an input ground associated with a system.

At 310, the method 300 may include providing the first output voltage to a programmable device.

At 315, the method 300 may include controlling, by the programmable device, at least a second output voltage of a second power supply associated with the system, where the second power supply is referenced to an output ground associated with the system.

In some aspects, the pulse width modulation controller is included in a first voltage regulator. In some aspects, the method 300 may include generating and providing, by the programmable device, a drive signal to a second voltage regulator. In some aspects, the method 300 may include generating, by the second voltage regulator, the second output voltage based on the drive signal.

In some aspects, the method 300 may include receiving an input voltage at the first voltage regulator and the second voltage regulator; generating, by the first power supply, the first output voltage based on the input voltage; and generating, by the second power supply, the second output voltage based on the input voltage.

In some aspects, the programmable device provides the drive signal to a field effect transistor included in the second voltage regulator via a gate driver included in the second voltage regulator and an isolator, where the field effect transistor is referenced to the input ground and is galvanically isolated from the programmable device.

In some aspects, the method 300 may include providing, by a current sensing device, a sensed current associated with providing the second output voltage. In some aspects, the method 300 may include generating or modifying, by the programmable device, a drive signal associated with controlling at least the second output voltage, based on the sensed current.

In some aspects, the method 300 may include generating or modifying, by the programmable device, a drive signal associated with controlling at least the second output voltage, based on a measurement of the second output voltage.

In some aspects, the method 300 may include generating or modifying, by the programmable device, a pulse width modulation drive signal associated with controlling at least the second output voltage, based on at least one of voltage feedback and current feedback associated with the second output voltage.

In some aspects, the method 300 may include controlling, by a control device, one or more functions of the system different from control of the first power supply and the second power supply, where the programmable device is included in a portion of the control device.

In the descriptions of the flowcharts herein, the operations may be performed in a different order than the order shown, or the operations may be performed in different orders or at different times. Certain operations may also be left out of the flowcharts, one or more operations may be repeated, or other operations may be added to the flowcharts.

As described herein, aspects of the motor drive system 100 present significant advancements and advantages in power supply and voltage converter design.

The configuration of the motor drive system 100 enables synchronized functioning, orderly power sequencing, and reduces or eliminates dependence on circuits for independent voltage monitoring.

The motor drive system 100 and techniques described herein support comprehensive recording by the programmable device 110 of performance data of the power supply 130 (and 3rd through nth power supplies), which the programmable device 110 is controlling, for prognostic and health monitoring purposes. That is, for example, the systems and techniques described herein support opportunities for comprehensive data logging which facilitates superior prognostics (e.g., associated with predicting issues) and capabilities for monitoring health of the motor drive system 100 over time.

Non-limiting examples of the monitoring include monitoring change in PWM or duty cycle compared to regular operation, monitoring change in response time of the power supply components, and continuous monitoring of supply generation by the power supplies described herein. Use of the programmable device 110 as described herein provides opportunities for prognostic and health monitoring. For example, the programmable device 110 is capable of monitoring frequency and duty cycle a common input node (e.g., input terminal 101) associated with the primary side of the motor drive system 100.

The motor drive system 100 and techniques described herein support reduced dependency on PWM controller ICs provided by vendors. For example, the motor drive system 100 and techniques described herein provide independence from restricting features of voltage converters (e.g., voltage converter 104, 3rd through nth voltage converters) of the motor drive system 100 to features provided by vendor provided PWM controllers (e.g., PWM controller 105). That is, for example, the systems and techniques described herein support eliminating or reducing reliance on the features of a vendor provided, primary side control PWM controller (e.g., PWM controller 105 described herein), enabling more resilient designs with improved control over supplies, increased design options, and increased flexibility. Accordingly, for example, the motor drive system 100 and techniques described herein overcome problems in which features of PWM controllers (e.g., PWM controller 105) are confined to the selected IC for the switching regulator, restricting the capabilities of a power supply.

The motor drive system 100 provides dynamic control over both switching frequency and pulse width modulation (PWM) pattern of DC-DC converters (e.g., voltage converter 104, 3rd through nth voltage converters described herein), enabling precise voltage regulation and reducing peak emissions at specific frequencies. The motor drive system 100 supports tunable voltage regulation as described herein.

In some aspects, the motor drive system 100 (e.g., through the programmable device 110) exhibits dynamic control over both switching frequency and PWM pattern, enabling precise voltage regulation and reducing peak emissions at specific frequencies. The motor drive system 100 (e.g., through the programmable device 110) can leverage various techniques to address EMI concerns by dynamically modulating the switching frequency within a specified range, dispersing peak emissions, and mitigating the impact of the peak emissions at discrete frequencies.

The motor drive system 100 and techniques described herein overcome problems affecting other PWM controllers such as, for example, limitations by the other PWM controllers for controlling the switching frequency during duty cycle adjustments. Such limitations by the other PWM controllers restrict opportunities to achieve an adjustable electromagnetic interference (EMI) spectrum without implementing hardware modifications for improved EMI-EMC compliance. Such limitations by the other PWM controllers restrict opportunities for selecting more cost-effective and easily available components for a system. The motor drive system 100 and techniques described herein support capabilities for adjusting EMI spectrum without implementing hardware modifications for improved EMI-EMC compliance. The motor drive system 100 and techniques described herein support the selection more cost-effective and easily available components for a system for providing power.

In some aspects, the motor drive system 100 (e.g., through the programmable device 110) enable a reduced reliance on PWM controller manufacturers, with added benefits of porting specialized features with reduced risk of component obsolescence. For example, the features described herein may be logically implemented on any suitable programmable device, with no dependence on specialized hardware.

The motor drive system 100 and techniques described herein support improved control on power sequencing. The challenge of controlling power sequencing arises for cases in which power regulators generating respective power supplies are referenced to isolated reference ground planes. As described herein, The motor drive system 100 and techniques described herein support improved control, even though the power supplies described herein (e.g., isolated power supply 130, 3rd through nth isolated power supplies) are referenced to isolated reference ground planes.

The motor drive system 100 and techniques described herein reduce the burden on the PWM controller 105. For example, some other approaches may be reliant on control circuitry which is included in the PWM controller 105, preconfigured by the vendor, and unable to be modified. Accordingly, for example, such other approaches are limited to specifications which are prespecified and fixed by the vendor.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the various embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A system comprising:
a pulse width modulation controller (105) configured to control a first output voltage of a first power supply associated with the system, wherein the first power supply is referenced to an input ground associated with the system; and
a programmable device (110) configured to control at least a second output voltage of a second power supply associated with the system, wherein the second power supply is referenced to an output ground associated with the system,
wherein the programmable device (110) is powered based on the first output voltage.

2. The system of claim 1, further comprising:
a first voltage regulator comprising the pulse width modulation controller (105); and
a second voltage regulator,
wherein:
the programmable device (110) is configured to generate and provide a drive signal to the second voltage regulator in association with controlling the drive signal; and
the second output voltage is based on the drive signal.

3. The system of claim 2, wherein the first output voltage at the first power supply and the second output voltage at the second power supply are based on an input voltage received at the first voltage regulator and the second voltage regulator.

4. The system of claim 2, wherein:
the second voltage regulator comprises a field effect transistor controllable based on the drive signal, wherein the field effect transistor is referenced to the input ground and is galvanically isolated from the programmable device (110), and optionally further comprising:
an auxiliary supply referenced to the input ground associated with the system;
a gate driver powered by the auxiliary supply; and
an isolator powered by the auxiliary supply and the first output voltage, wherein first circuitry of the isolator is referenced to the input ground associated with the system, and second circuitry of the isolator is referenced to another output ground associated with the system,
wherein the programmable device (110) is configured to provide the drive signal to the field effect transistor via the gate driver and the isolator.

5. The system of claim 2, wherein the second power supply is galvanically isolated from the second voltage regulator, the first voltage regulator, the first power supply, and the programmable device (110).

6. The system of any preceding claim, further comprising a current sensing device configured to provide a sensed current associated with providing the second output voltage,
wherein the programmable device (110) is configured to generate or modify a drive signal associated with controlling at least the second output voltage, based on the sensed current.

7. The system of any preceding claim, wherein the programmable device (110) is configured to generate or modify a drive signal associated with controlling at least the second output voltage, based on a measurement of the second output voltage, or wherein:
the programmable device (110) is configured to generate or modify a pulse width modulation drive signal associated with controlling at least the second output voltage, based on at least one of voltage feedback and current feedback associated with the second output voltage.

8. The system of any preceding claim, further comprising a control device configured to control one or more functions of the system, wherein the programmable device (110) is comprised in a portion of the control device.

9. The system of any preceding claim, further comprising:
a first transformer configured to:
generate the first output voltage at a first winding of the first transformer based on an input voltage; and
generate an auxiliary output voltage at an auxiliary winding of the first transformer based on the input voltage; and
a second transformer configured to:
generate the second output voltage at a second winding of the second transformer based on the input voltage,
wherein the first winding is galvanically isolated from the second winding.

10. An apparatus comprising:
a pulse width modulation controller (105) configured to control a first output voltage of a first power supply associated with a system, wherein the first power supply is referenced to an input ground associated with the system; and
a programmable device (110) configured to control at least a second output voltage of a second power supply associated with the system, wherein the second power supply is referenced to an output ground associated with the system,
wherein the programmable device (110) is powered based on the first output voltage.

11. A method comprising:
controlling, by a pulse width modulation controller (105), a first output voltage of a first power supply associated with a system, wherein the first power supply is referenced to an input ground associated with a system;
providing the first output voltage to a programmable device (110); and
controlling, by the programmable device (110), at least a second output voltage of a second power supply associated with the system, wherein the second power supply is referenced to an output ground associated with the system.

12. The method of claim 11, wherein:
the pulse width modulation controller (105) is comprised in a first voltage regulator; and
the method further comprises:
generating and providing, by the programmable device (110), a drive signal to a second voltage regulator; and
generating, by the second voltage regulator, the second output voltage based on the drive signal.

13. The method of claim 12, further comprising:
receiving an input voltage at the first voltage regulator and the second voltage regulator;
generating, by the first power supply, the first output voltage based on the input voltage; and
generating, by the second power supply, the second output voltage based on the input voltage, or wherein:
the programmable device (110) provides the drive signal to a field effect transistor comprised in the second voltage regulator via a gate driver comprised in the second voltage regulator and an isolator, wherein the field effect transistor is referenced to the input ground and is galvanically isolated from the programmable device (110).

14. The method of any of claims 11 to 13, further comprising:
providing, by a current sensing device, a sensed current associated with providing the second output voltage; and
generating or modifying, by the programmable device (110), a drive signal associated with controlling at least the second output voltage, based on the sensed current.

15. The method of any of claims 11 to 14, further comprising:
generating or modifying, by the programmable device (110), a drive signal associated with controlling at least the second output voltage, based on a measurement of the second output voltage, or
further comprising:
generating or modifying, by the programmable device (110), a pulse width modulation drive signal associated with controlling at least the second output voltage, based on at least one of voltage feedback and current feedback associated with the second output voltage, or further comprising:
controlling, by a control device, one or more functions of the system different from control of the first power supply and the second power supply, wherein the programmable device (110) is comprised in a portion of the control device.
